# EUROPEAN PATENT APPLICATION

(11) **EP 1 967 611 A1**
(43) Date of publication of application: **10.09.2008**
(21) Application number: 06843713.6
(22) Date of filing: 26.12.2006
(51) Int. Cl.: C23C 26/00, B05D 7/24, B32B 15/08, C21D 9/46

(54) **ELECTROMAGNETIC STEEL SHEET HAVING INSULATING COATING FILM AND METHOD FOR PRODUCING SAME**

(30) Priority: 28.12.2005 JP 2005377067; 08.12.2006 JP 2006331788
(71) Applicant: JFE Steel Corporation, Tokyo, 100-0011 (JP)
(72) Inventor: SHIGEKUNI, Tomofumi, Tokyo 100-0011 (JP); SASHI, Kazumichi, Tokyo 100-0011 (JP); KOHNO, Masaaki, Tokyo 100-0011 (JP); KOMORI, Yuka, Tokyo 100-0011 (JP)
(74) Representative: Grünecker, Kinkeldey, Stockmair & Schwanhäusser Anwaltssozietät
(86) International application number: PCT/JP2006/326340
(87) International publication number: WO 2007/074927

(57) **Abstract**

An insulation coating containing a composite resin composed of polysiloxane and a polymer containing carbon element is formed on the surface of an electrical steel sheet, thus obtaining an electrical steel sheet having an insulation coating that gives corrosion resistance and punchability equivalent to or higher than those of Cr-containing insulation coating.

## Description

### TECHNICAL FIELD

The present invention relates to an electrical steel sheet having an insulation coating and to a method for manufacturing thereof, and specifically relates to an electrical steel sheet having an insulation coating which substantially does not contain chromium, and to a method for manufacturing thereof.

### BACKGROUND ART

Insulation coating on an electrical steel sheet used for motors, transformers, and the like is requested to have not only interlaminar resistance but also varieties of characteristics such as convenience during working and forming and stability during storage and use. Furthermore, since electrical steel sheets are used in varieties of applications, there are developed various kinds of insulation coating responding to each application.

For example, when an electrical steel sheet is treated by punching, shearing, bending, and the like, the residual strain deteriorates the magnetic characteristics. To recover the deteriorated magnetic characteristics, stress relieving annealing is often applied to thus treated electrical steel sheet at an approximate temperature range from 750°C to 850°C. On applying the stress relieving annealing, the insulation coating has to endure the annealing treatment.

The insulation coating is roughly grouped into three kinds: (a) inorganic coating which emphasizes weldability and heat resistance, and endures the stress relieving annealing, (excluding organic resin, in principle); (b) semi-organic coating comprising an inorganic compound as the basis and containing an organic resin, which aims to have both punchability and weldability, and endures the stress relieving annealing; and (c) organic coating for special applications, which cannot be treated by stress relieving annealing. As of these, the ones for general use, which endure the stress relieving annealing, are (a) and (b) which are the coatings containing inorganic compound, both of which contain chromium compound in the coating. Particularly, the chromate-based insulation coating of (b) type, containing organic resin, is widely used owing to the considerable improvement of punchability compared with the inorganic-based insulation coating.

For example, Examined Japanese Patent Publication No. 60-36476 describes an electrical steel sheet having an electrical insulation coating, which is manufactured by applying a coating liquid on the surface of a steel sheet, followed by baking by a known method, which coating liquid is prepared by mixing a bichromate-based aqueous solution containing at least one kind of bivalent metal with 5 to 120 parts by weight of solid content of a resin emulsion (vinyl acetate and VeoVa (TM) at a ratio ranging from 90/10 to 40/60), and 10 to 60 parts by weight of an organic reducing agent, to 100 parts by weight of CrO₃ in the aqueous solution.

Most of that type of chromate-based coatings for electric steel sheet contains trivalent chromium as the steel sheet products, raising no toxicity problem. Since, however, toxic hexavalent chromium has to be used in the stage of coating liquid, there is required to observe strict handling regulations as well as establishing satisfactory apparatus to secure good workplace environment.

Under the present state and responding to the recent increasing concern about the environment, also the field of electrical steel sheet faces the request of customers to supply products having insulation coating free from chromium.

As the technology using a main component other than chromic acid, many kinds of semi-organic insulation coatings containing inorganic colloid such as silica as the main component are disclosed. Owing to unnecessariness of handling toxic hexavalent chromium solution, those semi-organic insulation coatings containing inorganic colloid as the main component are highly advantageously used in view of environment. For instance, Japanese Patent Laid-Open No. 10-34812 discloses a method to improve the corrosion resistance of inorganic colloids by regulating the quantity of C1 and S in the resin/silica coating to a specified level or below. The method improves the corrosion resistance of the product sheet in a humidity cabinet test environment. However, the corrosion resistance thereof under severe conditions such as salt spray cannot reach the level of the corrosion resistance of the case applying Cr-containing insulation coating. Furthermore, with the addition of silica, punchability also cannot reach the good level of the case applying Cr-containing insulation coating, as in the case of corrosion resistance.

### DISCLOSURE OF THE INVENTION

### [PROBLEM TO BE SOLVED BY THE INVENTION]

Responding to the above conditions, an object of the present invention is to provide an electrical steel sheet having an insulation coating which has performance equivalent to or higher than that of Cr-containing insulation coating even as an insulation coating containing an inorganic compound free from Cr as the main component, giving excellent corrosion resistance and punchability, and to provide a method for manufacturing thereof.

### [MEANS TO SOLVE THE PROBLEM]

To solve the above problem, the inventors of the present invention conducted detail study and derived the following findings.

The corrosion resistance of product sheets with silica-based chromate-free coating cannot fully be improved even by the currently proposed decreased amount of impurities such as Cl⁻ and SO₄²⁻, and the corrosion resistance thereof becomes nonuniform depending on the manufacturing conditions. To this point, the inventors of the present invention investigated the causes.

The investigation of the inventors of the present invention confirmed that many cases of deteriorating the corrosion resistance are accompanied with cracks in the coating. That is, since colloidal silica does not allow the silica to form a three-dimensional network (network structure) at a baking temperature ranging from about 200°C to about 300°C, thus the silica itself has no film-formability, which is presumably the cause of crack generation in the coating and of nonuniformily of corrosion resistance depending on the manufacturing conditions.

From the above findings, it was found that the formation of three-dimensional network of -Si-O- is important to form a coating having good corrosion resistance and that the problem is solved by providing the resin with a polysiloxane structure therein, and by crosslinking the polysiloxane with an organic matter, thereby perfected the present invention.

The present invention has been perfected on the basis of the above findings, and the essence of the present invention is the following.
(1) An electrical steel sheet having an insulation coating, wherein the insulation coating contains a composite resin composed of polysiloxane and a polymer containing carbon element.
(2) The electrical steel sheet having the insulation coating according to (1), wherein the blending ratio of the polysiloxane to the solid content in the insulation coating is 10% by mass or more and 90% by mass or less as SiO₂.
(3) The electrical steel sheet having the insulation coating according to (1) or (2), wherein the polymer containing carbon element is one or more polymers selected from the group consisting of vinyl-based polymer, polyester-based polymer, alkyd-based polymer, polyurethane-based polymer, acrylic-based polymer, styrene-based polymer, polyethylene-based polymer, polypropylene-based polymer, polyamide-based polymer, polycarbonate-based polymer, phenol-based polymer, and epoxy-based polymer.
(4) The electrical steel sheet having the insulation coating according to any of (1) to (3), wherein the insulation coating further contains one or more compounds selected from the group consisting of silica, silicate, alumina, titania, tin oxide, cerium oxide, antimony oxide, tungsten oxide, and molybdenum oxide, as the inorganic compound.
(5) The electrical steel sheet having the insulation coating according to any of (1) to (4), wherein the coating weight of the insulation coating is 0.05 g/m² or more and 10 g/m² or less.
(6) A method for manufacturing an electrical steel sheet having an insulation coating, having the steps of: applying a coating liquid containing polysiloxane and a polymer containing carbon element on the surface of an electrical steel sheet; and baking the electrical steel sheet with the coating liquid applied on the electrical steel sheet.
(7) The method for manufacturing the electrical steel sheet having the insulation coating according to (6), wherein the polymer containing carbon element uses one or more polymers selected from the group consisting of vinyl-based polymer, polyester-based polymer, alkyd-based polymer, polyurethane-based polymer, acrylic-based polymer, styrene-based polymer, polyethylene-based polymer, polypropylene-based polymer, polyamide-based polymer, polycarbonate-based polymer, phenol-based polymer, and epoxy-based polymer.
(8) The method for manufacturing the electrical steel sheet having the insulation coating according to (6) or (7), wherein the coating liquid further contains one or more compounds selected from the group consisting of silica, silicate, alumina, titania, tin oxide, cerium oxide, antimony oxide, tungsten oxide, and molybdenum oxide, as the inorganic compound.
(9) The method for manufacturing the electrical steel sheet having the insulation coating according to any of (6) to (8), wherein the blending ratio of the polysiloxane to the total solid content in the coating liquid is 10% by mass or more and 90% by mass or less as SiO₂.
(10) The method for manufacturing electrical steel sheet having the insulation coating according to any of (6) to (9), wherein the coating liquid is applied and baked on the surface of the electrical steel sheet so as the coating weight of the insulation coating to become 0.05 g/m² or more and 10 g/m² or less.

### BEST MODE FOR CARRYING OUT THE INVENTION

The present invention is described in detail in the following.

The electrical steel sheet according to the present invention is a steel sheet having an insulation coating. The insulation coating contains a composite resin composed of polysiloxane and a polymer containing carbon element. The chemical composition is the most important requirement of the present invention. With that insulation coating, there are provided corrosion resistance and punchability equivalent to or higher than those of the electrical steel sheet having a Cr-containing insulation coating.

### <ELECTRICAL STEEL SHEET>

The description begins with the electrical steel sheet applied in the present invention.

The electrical steel sheet (also referred to "electrical iron sheet") before forming the coating, which can be used in the present invention, may be the one having any composition, not specifically limited, if only it is a steel sheet (iron sheet) which is adjusted to have at least the specific resistivity to obtain the desired magnetic characteristics (such as low iron loss). Specifically preferred one is to apply to medium to high grade electrical steel sheets containing sole Si or (Si + Al) in a range from about 0.1 to about 10.0% by mass, and giving about W_{15/50} ≤ 5.0 W/kg.

The surface of the electrical steel sheet on which the insulation coating is to be formed may be subjected to arbitrary preliminary treatment such as degreasing by alkali or the like, pickling by hydrochloric acid, sulfuric acid, phosphoric acid, and the like, intensifying, and magnetic domain refining, and may be as-manufactured surface (untreated).

Although the forming of a third layer between the insulation coating and the steel sheet surface is not necessarily required, the third layer may be formed at need. For example, ordinary manufacturing method may form an oxide film of the metal of steel sheet between the insulation coating and the steel sheet surface. The step of removing the oxide film can be eliminated. Although a forsterite film may be formed depending on the manufacturing method, the step of removing the film can be eliminated.

### <INSULATION COATING>

Next is the description about the insulation coating of the present invention, applied on the surface of the above steel sheet.

The insulation coating according to the present invention is obtained by applying a coating liquid containing polysiloxane and a polymer containing carbon element, which are the essential components described below, on the surface of the electrical steel sheet, followed by baking.

### • Polysiloxane

Polysiloxane is a polymer which has -Si-O- (siloxane bond) in the main molecular chain. The polysiloxane is preferably cross-linked with a polymer containing carbon element via -C-Si-O- bond and/or -C-O-Si-O- bond, in advance. The term "cross-link" referred to herein signifies the formation of what is called the "hybrid structure" through geometrical or chemical bond or the like. By the cross-linking, the inorganic component and the organic component form a three-dimensional structure in advance. Accordingly, a homogeneous coating free from cracks can be stably formed, thus a coating having good corrosion resistance can be formed.

When the polysiloxane is further provided with a functional group such as hydroxyl group and alkoxy group, it is possible to further bond to a polymer portion having carbon element, thus to strengthen the three-dimensional network.

The blending ratio of polysiloxane to the total solid content in the insulation coating, (or the total coating amount after baking), is preferably adjusted to a range of 10% by mass or more and 90% by mass or less as SiO₂ (i.e. in terms of SiO₂). If the blending ratio thereof is less than 10% by mass, the percentage of remained coating after the stress relieving annealing becomes small so that the removal property of sticktion deteriorates in some cases. When the blending ratio of polysiloxane increases, the coating becomes strong. If, however, the blending ratio thereof exceeds 90% by mass, the flexibility becomes insufficient, and the corrosion resistance may deteriorate depending on the manufacturing conditions. The blending ratio of polysiloxane to the total coating amount after the stress relieving annealing significantly increases owing to the decomposition of organic component, (to 50% or more), thus the blending ratio thereof after the stress relieving annealing is not required to stay within the above preferable range.

On determining the amount of polysiloxane, the term "as SiO₂" means that the content of SiO₂ is calculated on the assumption that all the contained Si forms SiO₂ For example, when sole Si amount is measured, the amount is converted into the amount of "SiO₂" and the ratio of the converted amount to the total solid content in the coating is determined.

The degree of polymerization of the polysiloxane is in an arbitrary range for applying without raising problem if only the degree provides the coating liquid. The degree of polymerization thereof is preferably adjusted to 10 or more as average.

### • Polymer containing carbon element

As the polymer containing carbon element according to the present invention, varieties of polymers are applicable. Examples of applicable polymer are vinyl-based polymer, polyester-based polymer, alkyd-based polymer, polyurethane-based polymer, acrylic-based polymer, polystyrene-based polymer, polyethylene-based polymer, polypropylene-based polymer, polyamide-based polymer, polycarbonate-based polymer, phenol-based polymer, and epoxy-based polymer. It is preferable to contain one or more of above-given polymers. These polymers can be used as a copolymer of them.

As of these, it is further preferable that the polymer has a functional group capable of bonding at side chain of the polymer molecule from the viewpoint of forming a cross-link with polysiloxane via -C-Si-O- bond and/or -C-O-Si-O- bond, thus forming a three-dimensional network. Although the degree of polymerization is not specifically limited, raising no problem of application, if only it is in a range allowing forming the coating liquid, the degree is preferably 2 or more as average, and more preferably 5 or more as average.

The blending ratio of the polymer containing carbon element to the total solid content in the insulation coating is preferably adjusted to 0.1 times or more the blending ratio of polysiloxane (above-described SiO₂ converted value).

The above-described means provides the characteristics aimed in the present invention. Adding to the above components, the following-given additives and other inorganic compounds and organic compounds can be added to achieve the object described below within a range not to deteriorate the coating property and effect of the present invention. On adding the following-given additives and other inorganic compounds and organic compounds, addition of excess amount thereof deteriorates the coating performance so that it is preferable to adjust the total amount of additives and other inorganic compounds and organic compounds to about 70% by mass or less to the total coating amount of the insulation coating according to the present invention, and more preferably 50% by mass or less. The total amount thereof may be 30% by mass or less.

### • Additive

Applicable additive includes known cross-linking agent, surface-active agent, rust-preventive agent, and lubricant. The adding amount of the additive is preferably adjusted to about 30% by mass or less to the total solid content of the coating.

### • Other inorganic compound and organic compound

The insulation coating according to the present invention can contain other inorganic compound and/or organic compound at a level not deteriorates the effect of the prevent invention.

For example, other oxide (sol) can be added if the liquid stability is assured. Applicable oxide (sol) includes silica(sol), (silica or silica sol, same is applied in the following), silicate, alumina(sol), titania(sol), tin oxide(sol), cerium oxide(sol), antimony oxide(sol), tungsten oxide(sol), and molybdenum oxide(sol).

For the case of specifically small blending ratio of polysiloxane, the addition of inorganic compound is preferred to improve adhesion property, corrosion resistance, and removal property of sticktion of annealed sheet.

The inorganic compound is added preferably by an amount of 70% by mass or less, more preferably 50% by mass or less, to the total solid content in the coating. The adding amount thereof may be 60% by mass or less, or 40% by mass or less. Preferably the adding amount thereof is 5% by mass or more, and more preferably 10% by mass or more.

The present invention aims to obtain good coating characteristics without adding chromium compound. Therefore, from the point of preventing the environmental pollution caused by the manufacturing process and by the products, preferably the insulation coating of the present invention substantially does not contain chromium. The allowable chromium amount as impurity is preferably regulated to 0.1% by mass or less as CrO₃ to the total mass of solid content (total coating amount) in the insulation coating.

### <MANUFACTURING METHOD>

The following is the description about the method for manufacturing the electrical steel sheet having the insulation coating according to the present invention.

The preliminary treatment for the electrical steel sheet used as the starting material of the present invention is not specifically limited. Non-preliminary treatment or preliminary treatment is applicable. Preferred preliminary treatment includes degreasing by alkali or the like, and pickling by hydrochloric acid, sulfuric acid, phosphoric acid, and the like.

On the steel sheet, there is applied a coating liquid which contains above-described polysiloxane and the polymer containing carbon element. After that, baking treatment is given to the electrical steel sheet applied with the above coating liquid, thus forming the insulation coating on the electrical steel sheet.

At this step, the coating liquid preferably has the blending ratio of polysiloxane within a range from 10 to 90% by mass as SiO₂ to the total solid content. As described above, the blending ratio thereof of less than 10% by mass results in reduced percentage of remained coating after the stress relieving annealing, which may deteriorate the removal property of sticktion. When the blending ratio of polysiloxane increases, the coating becomes strong. If, however, the blending ratio thereof exceeds 90% by mass, the flexibility becomes insufficient, and the corrosion resistance may deteriorate depending on the manufacturing conditions.

The three-dimensional network structure of the coating, aimed in the present invention, can be attained by the above treatment. To form further dense network structure and for further surely forming the network structure, however, it is preferable that the polysiloxane and the polymer containing carbon element are cross-linked with each other in advance in the coating liquid. Thus the three-dimensional network structure may be strengthened by further adding a cross-linking agent. It is also effective to use a polysiloxane containing functional group such as hydroxyl group and alkoxy group.

The raw material of the applying coating is preferably aqueous or oily material of paste or liquid type. From the point not to increase unnecessarily the coating thickness (coating weight), however, the raw material thereof is preferably of liquid type with the basis of water or organic solvent. In the following description, the term "coating liquid" also includes the paste type in principle.

Applicable method for applying the insulation coating adopts varieties of apparatuses used generally in industries, such as roll coater, flow coater, spray, knife coater, and bar coater.

Also for the baking method, ordinarily applied ones can be used, such as hot air type, infrared heating type, and induction heating type. The baking temperature may be at an ordinary level. To avoid thermal decomposition of the resin, however, the baking temperature is preferably selected to 350°C or below, and more preferable range is 150°C or above and 300°C or below.

### <COATING WEIGHT OF INSULATION COATING>

Although the coating weight of the insulation coating is not specifically limited, it is preferred to regulate the range from 0.05 g/m² or more to 10 g/m² or less per one coating side, and more preferably from 0.1 g/m² or more to 10 g/m² or less per one coating side. If the coating weight thereof is less than 0.05 g/m², industrial means is difficult to attain uniform application, and in some cases, stable punchability and corrosion resistance cannot be attained. If the coating weight thereof exceeds 10 g/m², further improvement of coating performance cannot be obtained, and economy may be lost. The measurement of coating weight is conducted on the steel sheet which completed baking treatment and does not receive stress relieving annealing, and the measurement can adopt the weight method in which only the coating is dissolved in hot-alkali or the like, and the weight change before and after dissolving is determined.

Preferred range of coating weight after the stress relieving annealing is from about 0.01 g/m² or more to about 9.0 g/m² or less.

The insulation coating according to the present invention is preferably formed on both sides of the steel sheet. Depending on the object, however, the insulation coating may be formed only on one side thereof. That is, depending on the object, the insulation coating according to the present invention is formed only on one side of the steel sheet, while other side is coated by other insulation coating, or other side is left non-coating.

### <USE EMBODIMENTS>

The applications of the electrical steel sheet having the insulation coating according to the present invention are not specifically limited. To utilize the heat resistance of the coating, however, most suitable application is to use the electrical steel sheet being subjected to stress relieving annealing at an approximate temperature range from 750°C to 850°C. For example, specifically suitable use is the manufacture of laminated iron core by punching electrical steel sheets, and by applying stress relieving annealing to them, then by laminating them.

### (EXAMPLE 1)

The effect of the present invention is described in detail referring to the examples. However, the present invention is not limited to these examples.

As the electrical steel sheet, there was adopted a fully processed electrical steel sheet which contained the steel components of 0.45% by mass Si, 0.25% by mass Mn, and 0.48% by mass Al, and which was treated by finish annealing having a sheet thickness of 0. 5 mm. The respective composite resins, which were cross-linked between polysiloxane and the respective resins in advance under the respective conditions given in Tables 1, 3, and 5, were applied on the electrical steel sheet, respectively, using roll coater. The coated steel sheets were baked in a hot-air furnace at a baking temperature of 230°C as the peak metal temperature, thus prepared the respective specimens. For some of Examples and Comparative Examples, the chemicals given in Tables 1, 3, and 5 were added as the component other than the composite resin.

For thus prepared specimens (electrical steel sheets having insulation coating), the coating was dissolved in a boiling 50% NaOH aqueous solution, and the coating weight of the insulation coating was determined using the above-described weight method.

For thus obtained electrical steel sheets having insulation coating, the following-described coating characteristics were determined and evaluated.

### <CORROSION RESISTANCE - PRODUCT SHEET 1>

To the specimens, humidity cabinet test (50°C, higher than 98% RH (relative humidity)) was given to evaluate the red rust generation rate after 48 hours by visual observation in terms of area percentage.

### (JUDGMENT CRITERION)

A: Red rust area percentage: from 0% to less than 20%
B: Red rust area percentage: from 20% to less than 40%
C: Red rust area percentage: from 40% to less than 60%
D: Red rust area percentage: from 60% to 100%

### <CORROSION RESISTANCE - PRODUCT SHEET 2>

To the specimens, salt spray test (35°C) specified by JIS was given to evaluate the red rust generation rate after 5 hours by visual observation in terms of area percentage.

### (JUDGMENT CRITERION)

A: Red rust area percentage: from 0% to less than 25%
B: Red rust area percentage: from 25% to less than 50%
C: Red rust area percentage: from 50% to less than 75%
D: Red rust area percentage: from 75% to 100%

### <CORROSION RESISTANCE AFTER THE STRESS RELIEVING ANNEALING

### (CORROSION RESISTANCE - ANNEALED SHEET)>

To the specimens, annealing was given in nitrogen atmosphere under a condition of 750°C for 2 hours. To thus obtained annealed sheets, constant temperature and humidity test (50°C and 80% RH) was given to evaluate the red rust generation rate after 14 days by visual observation in terms of area percentage.

### (JUDGMENT CRITERION)

A: Red rust area percentage: from 0% to less than 20%
B: Red rust area percentage: from 20% to less than 40%
C: Red rust area percentage: from 40% to less than 60%
D: Red rust area percentage: from 60% to 100%

### <ADHESION PROPERTY>

To (i) the specimens and to (ii) the annealed sheets treated by annealing in nitrogen atmosphere under a condition of 750°C for 2 hours, the bending and straightening test was given at 20 mmϕ and 180°, thereby evaluated the adhesion property by visual observation in terms of coating peeling rate.

### (JUDGMENT CRITERION)

A: No peeling occurred.
B: Peeling rate is less than 20%.
C: Peeling rate is 20% or more and less than 40%.
D: Peeling rate is 40% or more to entire area peeling.

### <SOLVENT RESISTANCE>

Various kinds of solvents (hexane, xylene, methanol, and ethanol) were impregnated in absorbent cotton, respectively. Let each impregnated cotton rub back and forth by five times on the surface of each specimen. The change in appearance after that was visually observed.

### (JUDGMENT CRITERION)

A: No change occurred.
B: Very little change occurred.
C: Slightly discolored.
D: Significant change occurred.

### <PUNCHABILITY>

With a 15 mmϕ steel die, the specimen was punched repeatedly until the bur height reached 50 µm. The evaluation was given by the number of punch cycles at the 50 µm height.

### (JUDGMENT CRITERION)

A: One million cycles or more
B: 500 thousand cycles or more and less than one million cycles
C: 100 thousand cycles or more and less than 500 thousand cycles
D: less than 100 thousand cycles

### <REMOVAL PROPERTIY OF STICKTION>

Ten sheets of specimens each having 50 mm square size were stacked. Annealing was given to the stacked specimens while applying a load (200 g/cm²) in nitrogen atmosphere under a condition of 750°C for 2 hours. Then, a weight of 500 g was dropped onto the specimens (steel sheets), and the dropping height that induced break of the specimens into five segments was determined.

### (JUDGMENT CRITERION)

A: 10 cm or less
B: more than 10 cm and not more than 15 cm
C: more than 15 cm and not more than 30 cm
D: more than 30 cm

Tables 2, 4, and 6 show the results of above tests.

**Table 1**

| | Composite resin | | Component other than the composite resin | | Blending ratio of polysiloxane in total solid content (%) (as SiO₂) | Coating weight (g/m²) |
|---|---|---|---|---|---|---|
| | Resin skeleton | Blending ratio of polysiloxane in the composite resin (%) (as SiO₂) | Kind of chemicals | Blending ratio of other component in the coating (%) | | |
| Example 1 | Vinyl acetate | 50 | - | - | 50 | 0.3 |
| Example 2 | Acrylic | 50 | - | - | 50 | 0.9 |
| Example 3 | Polyester | 50 | - | - | 50 | 0.05 |
| Example 4 | Alkyd | 50 | - | - | 50 | 10 |
| Example 5 | Polyurethane | 90 | - | - | 90 | 1.2 |
| Example 6 | Acrylic | 10 | - | - | 10 | 2.5 |
| Example 7 | Acrylic | 75 | - | - | 75 | 0.8 |
| Example 8 | Acrylic | 25 | Silica sol(20nm) | 30 | 17.5 | 0.8 |
| Example 9 | Acrylic | 50 | - | - | 50 | 0.8 |
| Example 10 | Acrylic | 50 | - | - | 50 | 0.8 |
| Example 11 | Acrylic | 5 | - | - | 5 | 4.0 |
| Example 12 | Acrylic | 95 | - | - | 95 | 0.5 |
| Example 13 | Acrylic | 50 | - | - | 50 | 0.03 |
| Example 14 | Acrylic | 50 | - | - | 50 | 12 |
| Comparative Example 1 | - | - | Silica sol(20nm) Acrylic resin | 50 | 0 | 0.8 |
| Comparative Example 2 | - | - | Acrylic resin | 100 | 0 | 0.8 |
| Example 15 | Acrylic | 10 | - | - | 10 | 0.8 |
| Example 16 | Vinyl acetate | 10 | - | - | 10 | 0.8 |
| Example 17 | Polyester | 10 | - | - | 10 | 0.8 |
| Example 18 | Alkyd | 10 | - | - | 10 | 0.8 |
| Example 19 | Polyurethane | 10 | - | - | 10 | 0.8 |
| Example 20 | Polystyrene | 10 | - | - | 10 | 0.8 |
| Example 21 | Polyethylene | 10 | - | - | 10 | 0.8 |
| Example 22 | Polypropylene | 10 | - | - | 10 | 0.8 |
| Example 23 | Polyamide | 10 | - | - | 10 | 0.8 |
| Example 24 | Polycarbonate | 10 | - | - | 10 | 0.8 |
| Example 25 | Phenol | 10 | - | - | 10 | 0.8 |
| Example 26 | Epoxy | 10 | - | - | 10 | 0.8 |
| Example 27 | Polyurethane | 50 | - | - | 50 | 0.8 |
| Example 28 | Polystyrene | 50 | - | - | 50 | 0.8 |
| Example 29 | Polyethylene | 50 | - | - | 50 | 0.8 |
| Example 30 | Polypropylene | 50 | - | - | 50 | 0.8 |
| Example 31 | Polyamide | 50 | - | - | 50 | 0.8 |
| Example 32 | Polycarbonate | 50 | - | - | 50 | 0.8 |
| Example 33 | Phenol | 50 | - | - | 50 | 0.8 |
| Example 34 | Epoxy | 50 | - | - | 50 | 0.8 |

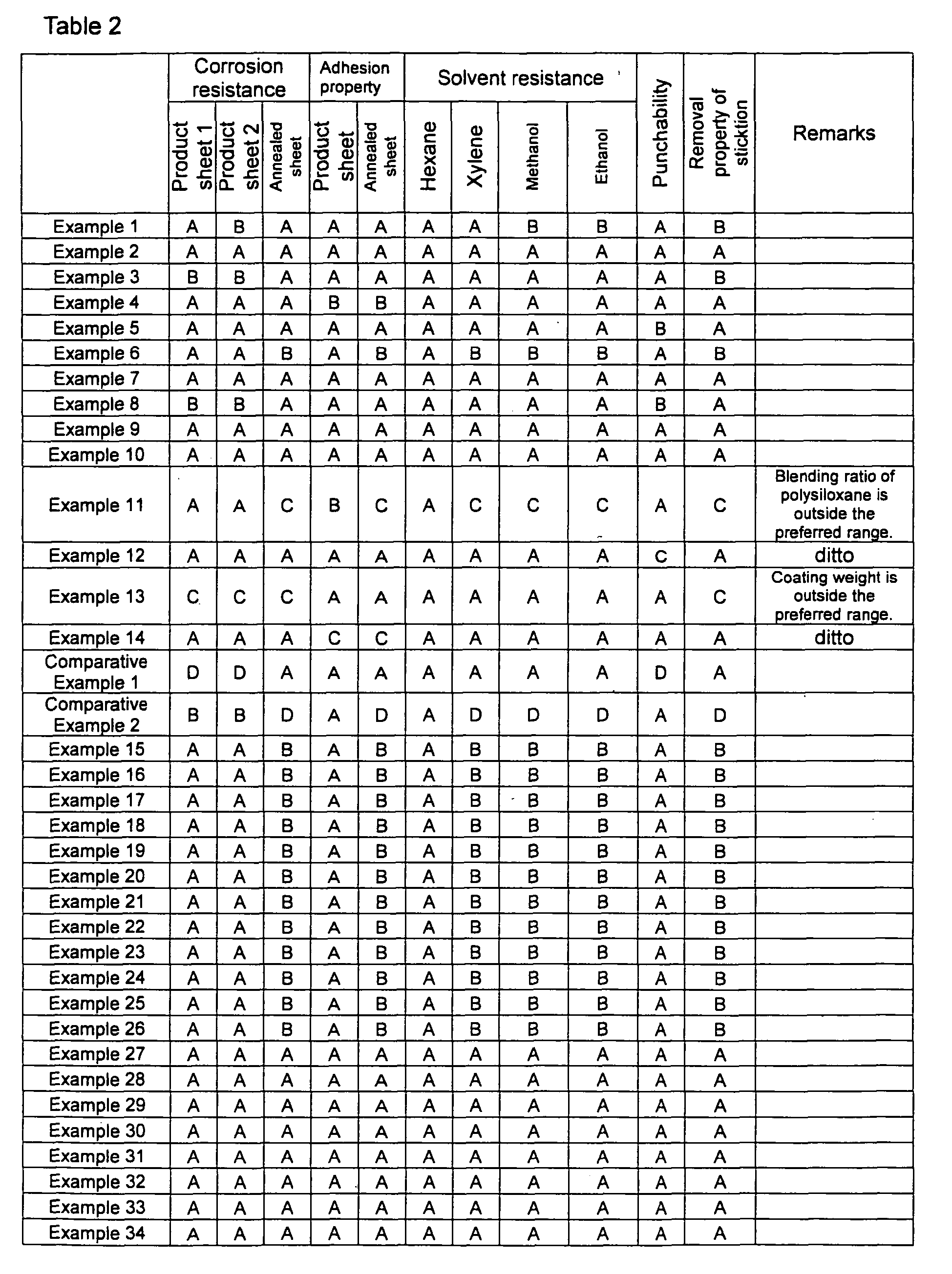

**Table 3**

| | Composite resin | | Component other than the composite resin | | Blending ratio of polysiloxane in total solid content (%) (as SiO₂) | Coating weight (g/m²) |
|---|---|---|---|---|---|---|
| | Resin skeleton | Blending ratio of polysiloxane in the composite resin (%) (as SiO₂) | Kind of chemicals | Blending ratio of other component in the coating (%) | | |
| Example 35 | Vinyl acetate | 75 | - | - | 75 | 0.8 |
| Example 36 | Polyester | 75 | - | - | 75 | 0.8 |
| Example 37 | Alkyd | 75 | - | - | 75 | 0.8 |
| Example 38 | Polyurethane | 75 | - | - | 75 | 0.8 |
| Example 39 | Polystyrene | 75 | - | - | 75 | 0.8 |
| Example 40 | Polyethylene | 75 | - | - | 75 | 0.8 |
| Example 41 | Polypropylene | 75 | - | - | 75 | 0.8 |
| Example 42 | Polyamide | 75 | - | - | 75 | 0.8 |
| Example 43 | Polycarbonate | 75 | - | - | 75 | 0.8 |
| Example 44 | Phenol | 75 | - | - | 75 | 0.8 |
| Example 45 | Epoxy | 75 | - | - | 75 | 0.8 |
| Example 46 | Vinyl acetate | 90 | - | - | 90 | 0.8 |
| Example 47 | Acrylic | 90 | - | - | 90 | 0.8 |
| Example 48 | Polyester | 90 | - | - | 90 | 0.8 |
| Example 49 | Alkyd | 90 | - | - | 90 | 0.8 |
| Example 50 | Polyurethane | 90 | - | - | 90 | 0.8 |
| Example 51 | Polystyrene | 90 | - | - | 90 | 0.8 |
| Example 52 | Polyethylene | 90 | - | - | 90 | 0.8 |
| Example 53 | Polypropylene | 90 | - | - | 90 | 0.8 |
| Example 54 | Polyamide | 90 | - | - | 90 | 0.8 |
| Example 55 | Polycarbonate | 90 | - | - | 90 | 0.8 |
| Example 56 | Phenol | 90 | - | - | 90 | 0.8 |
| Example 57 | Epoxy | 90 | - | - | 90 | 0.8 |
| Example 58 | Acrylic | 6 | Silica sol(20nm) | 20 | 4.8 | 0.8 |
| Example 59 | Acrylic | 12 | Silica sol(20nm) | 20 | 9.6 | 0.8 |
| Example 60 | Acrylic | 50 | Silica sol(20nm) | 30 | 35 | 0.8 |
| Example 61 | Acrylic | 50 | Silica sol(20nm) | 50 | 25 | 0.8 |
| Example 62 | Acrylic | 50 | Silica sol(10nm) | 30 | 35 | 0.8 |
| Example 63 | Acrylic | 50 | Na silicate | 30 | 35 | 0.8 |
| Example 64 | Acrylic | 50 | K silicate | 30 | 35 | 0.8 |
| Example 65 | Acrylic | 50 | Li silicate | 30 | 35 | 0.8 |
| Example 66 | Acrylic | 50 | Alumina sol | 30 | 35 | 0.8 |
| Example 67 | Acrylic | 50 | Titania sol | 30 | 35 | 0.8 |
| Example 68 | Acrylic | 50 | Tin sol | 30 | 35 | 0.8 |

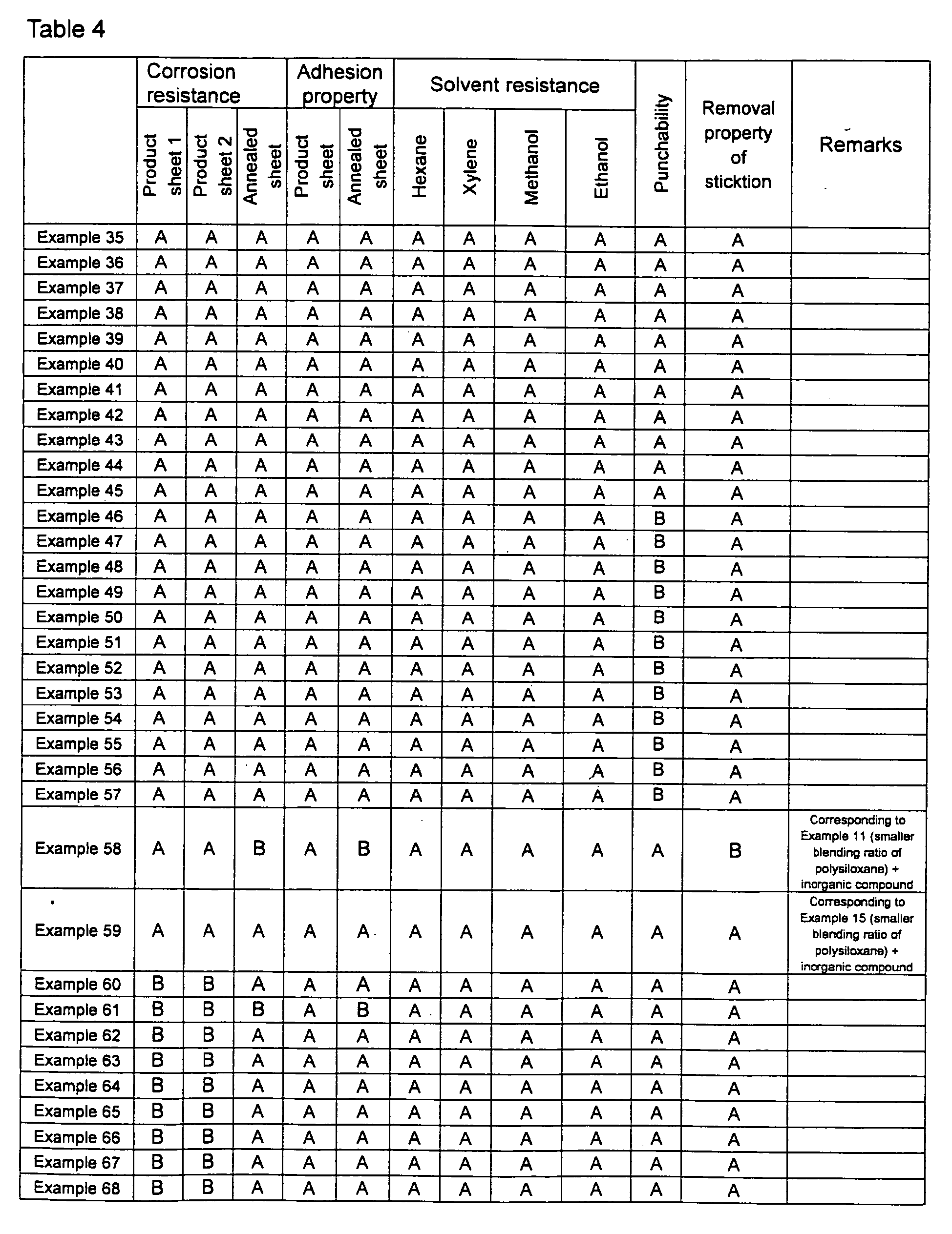

**Table 5**

| | Composite resin | | Component other than the composite resin | | Blending ratio of polysiloxane in total solid content (%) (as SiO₂ | Coating weight (g/m²) |
|---|---|---|---|---|---|---|
| | Resin skeleton | Blending ratio of polysiloxane in the composite resin (%) (as SiO₂) | Kind of chemicals | Blending ratio of other component in the coating (%) | | |
| Example 69 | Acrylic | 50 | Cerium sol | 30 | 35 | 0.8 |
| Example 70 | Acrylic | 50 | Antimony sol | 30 | 35 | 0.8 |
| Example 71 | Acrylic | 50 | Tungsten sol | 30 | 35 | 0.8 |
| Example 72 | Acrylic | 50 | Molybdenum sol | 30 | 35 | 0.8 |
| Example 73 | Acrylic | 75 | Silica sol(20nm) | 30 | 52.5 | 0.8 |
| Example 74 | Acrylic | 75 | Silica sol(20nm) | 50 | 37.5 | 0.8 |
| Example 75 | Acrylic | 75 | Silica sol(10nm) | 50 | 37.5 | 0.8 |
| Example 76 | Acrylic | 75 | Na silicate | 30 | 52.5 | 0.8 |
| Example 77 | Acrylic | 75 | K silicate | 30 | 52.5 | 0.8 |
| Example 78 | Acrylic | 75 | Li silicate | 30 | 52.5 | 0.8 |
| Example 79 | Acrylic | 75 | Alumina sol | 30 | 52.5 | 0.8 |
| Example 80 | Acrylic | 75 | Titania sol | 30 | 52.5 | 0.8 |
| Example 81 | Acrylic | 75 | Tin sol | 30 | 52.5 | 0.8 |
| Example 82 | Acrylic | 75 | Cerium sol | 30 | 52.5 | 0.8 |
| Example 83 | Acrylic | 75 | Antimony sol | 30 | 52.5 | 0.8 |
| Example 84 | Acrylic | 75 | Tungsten sol | 30 | 52.5 | 0.8 |
| Example 85 | Acrylic | 75 | Molybdenum sol | 30 | 52.5 | 0.8 |
| Example 86 | Acrylic | 90 | Silica sol(20nm) | 30 | 63 | 0.8 |
| Example 87 | Acrylic | 90 | Silica sol(20nm) | 50 | 45 | 0.8 |
| Example 88 | Acrylic | 90 | Silica sol(10nm) | 50 | 45 | 0.8 |
| Example 89 | Acrylic | 90 | Na silicate | 30 | 63 | 0.8 |
| Example 90 | Acrylic | 90 | K silicate | 30 | 63 | 0.8 |
| Example 91 | Acrylic | 90 | Li silicate | 30 | 63 | 0.8 |
| Example 92 | Acrylic | 90 | Alumina sol | 30 | 63 | 0.8 |
| Example 93 | Acrylic | 90 | Titania sol | 30 | 63 | 0.8 |
| Example 94 | Acrylic | 90 | Tin sol | 30 | 63 | 0.8 |
| Example 95 | Acrylic | 90 | Cerium sol | 30 | 63 | 0.8 |
| Example 96 | Acrylic | 90 | Antimony sol | 30 | 63 | 0.8 |
| Example 97 | Acrylic | 90 | Tungsten sol | 30 | 63 | 0.8 |
| Example 98 | Acrylic | 90 | Molybdenum sol | 30 | 63 | 0.8 |
| Example 99 | Acrylic-styrene^{*} | 75 | - | - | 75 | 0.8 |
| Example 100 | Acrylic-styrene^{*} | 75 | Silica sol(20nm) | 30 | 52.5 | 0.8 |
| Example 101 | Acrylic-ethylene^{*} | 75 | - | - | 75 | 0.8 |
| Example 102 | Acrylic | 50 | Silica sol(20nm) | 60 | 20 | 0.8 |
| Example 103 | Acrylic | 50 | Silica sol(20nm) | 70 | 15 | 0.8 |
| Reference Example | 85 parts by weight of magnesium chromate and 15 parts by weight of acrylic resin. | | | | | 0.8 |

| | | | | | | |
|---|---|---|---|---|---|---|
| * Copolymer of both resins. | | | | | | |

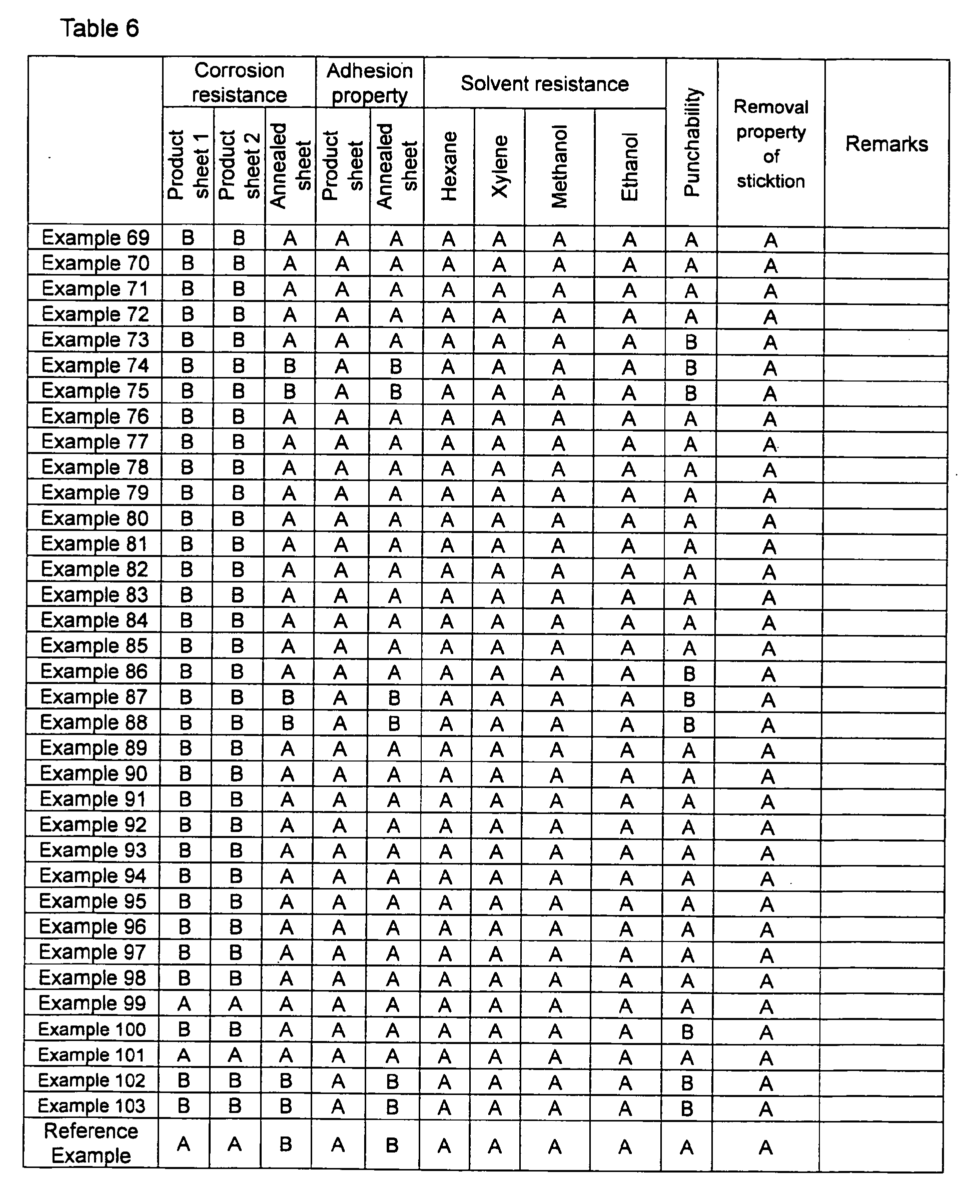

As seen in Tables 1 to 6, Examples of the present invention gave excellent corrosion resistance, adhesion property, solvent resistance, punchability, and removal property of sticktion. In particular, Examples of the present invention giving preferable range of polysiloxane blending ratio and coating weight of insulation coating further improved the above characteristics. For the case of small blending ratio of polysiloxane, particularly the addition of an inorganic compound improved various characteristics.

To the contrary, Comparative Examples deteriorated one or more of corrosion resistance, adhesion property, solvent resistance, punchability, and removal property of sticktion.

### INDUSTRIAL APPLICABILITY

The present invention provides an electrical steel sheet having an insulation coating giving excellent corrosion resistance and punchability. The electrical steel sheet having the insulation coating according to the present invention does not contain chromium, and gives performances such as corrosion resistance and punchability equivalent to or higher than those of Cr-containing insulation coating. Consequently, the present invention is friendly to environment not only as the final products but also during the manufacturing process, and allows wide use including motors and transformers, thus the present invention is the one profitable in industrial point of view.

## Claims

1. An electrical steel sheet having an insulation coating, wherein the insulation coating contains a composite resin composed of polysiloxane and a polymer containing carbon element.

2. The electrical steel sheet having the insulation coating according to claim 1, wherein the blending ratio of the polysiloxane to the solid content in the insulation coating is 10% by mass or more and 90% by mass or less as SiO₂.

3. The electrical steel sheet having the insulation coating according to claim 1 or claim 2, wherein the polymer containing carbon element is one or more polymers selected from the group consisting of vinyl-based-polymer, polyester-based polymer, alkyd-based polymer, polyurethane-based polymer, acrylic-based polymer, styrene-based polymer, polyethylene-based polymer, polypropylene-based polymer, polyamide-based polymer, polycarbonate-based polymer, phenol-based polymer, and epoxy-based polymer.

4. The electrical steel sheet having the insulation coating according to claim 1 or claim 2, wherein the insulation coating further contains one or more compounds selected from the group consisting of silica, silicate, alumina, titania, tin oxide, cerium oxide, antimony oxide, tungsten oxide, and molybdenum oxide, as the inorganic compound.

5. The electrical steel sheet having the insulation coating according to claim 3, wherein the insulation coating further contains one or more compounds selected from the group consisting of silica, silicate, alumina, titania, tin oxide, cerium oxide, antimony.oxide, tungsten oxide, and molybdenum oxide, as the inorganic compound.

6. The electrical steel sheet having the insulation coating according to claim 1 or claim 2, wherein the coating weight of the insulation coating is 0.05 g/m² or more and 10 g/m² or less.

7. A method for manufacturing an electrical steel sheet having an insulation coating, comprising the steps of: applying a coating liquid containing polysiloxane and a polymer containing carbon element on the surface of an electrical steel sheet; and baking the electrical steel sheet with the coating liquid applied on the electrical steel sheet.

8. The method for manufacturing the electrical steel sheet having the insulation coating according to claim 7, wherein the polymer containing carbon element uses one or more polymers selected from the group consisting of vinyl-based polymer, polyester-based polymer, alkyd-based polymer, polyurethane-based polymer, acrylic-based polymer, styrene-based polymer, polyethylene-based polymer, polypropylene-based polymer, polyamide-based polymer, polycarbonate-based polymer, phenol-based polymer, and epoxy-based polymer.

9. The method for manufacturing the electrical steel sheet having the insulation coating according to claim 7 or claim 8, wherein the coating liquid further contains one or more compounds selected from the group consisting of silica, silicate, alumina, titania, tin oxide, cerium oxide, antimony oxide, tungsten oxide, and molybdenum oxide, as the inorganic compound.

10. The method for manufacturing the electrical steel sheet having the insulation coating according to claim 7 or claim 8, wherein the blending ratio of the polysiloxane to the total solid content in the coating liquid is 10% by mass or more and 90% by mass or less as SiO₂.

11. The method for manufacturing the electrical steel sheet having the insulation coating according to claim 9, wherein the blending ratio of the polysiloxane to the total solid content in the coating liquid is 10% by mass or more and 90% by mass or less as SiO₂.

12. The method for manufacturing the electrical steel sheet having the insulation coating according to claim 7 or claim 8, wherein the insulation coating is prepared by applying a coating liquid on the surface of an electrical steel sheet and baking so as the coating weight of the insulation coating to become 0.05 g/m² or more and 10 g/m² or less.
